Europäisches Patentamt

European Patent Office

Office européen des brevets

(11) Publication number: **0 062 006**
**A2**

## (12) EUROPEAN PATENT APPLICATION

(21) Application number: 82810138.6

(51) Int. Cl.³: **G 02 F 1/29**

(22) Date of filing: 26.03.82

(30) Priority: 30.03.81 US 249193

(43) Date of publication of application:
06.10.82 Bulletin 82/40

(84) Designated Contracting States:
CH DE FR GB LI NL

(71) Applicant: ASULAB S.A.
Faubourg du Lac 6
CH-2502 Bienne(CH)

(72) Inventor: Spring, Peter
Homberg Strasse 17
CH-3613 Steffisburg(CH)

(74) Representative: Gresset, Jean et al,
ASUAG Département Brevets et Licences Faubourg du
Lac 6
CH-2501 Bienne(CH)

(54) Method and apparatus for repeatedly deflecting a beam of coherent radiation.

(57) The method allows to repeatly deflect a beam of coherent radiation for obtaining a substantial saw-tooth motion for the beam. The radiation is first polarized so as to generate a plurality of successive output elementary beams of corresponding polarization. The polarization occurs according to a sequential law whose frequency is substantially equal to the frequency of the saw-tooth motion of the beam. The output elementary beams are then deflected successively of a same given angular value according to a substantial sine law before the commutation of the deflexion to a next output elementary beam. The output elementary beams are deflected according to a same common path-way so as to generate a saw-tooth motion of the beam thereon.

Tig. 3

0062006
ESA 116
700.57 BE

## METHOD AND APPARATUS FOR REPEATLY DEFLECTING A BEAM OF COHERENT
## RADIATION

Deflecting devices of laser beams for obtaining a saw-tooth motion of the emerging beam generally consist of a reflector provided with an adequate movement, usually an angular movement.

A reflector with one reflecting surface is actuated at a constant angular velocity in one direction and at a much greater velocity in the return direction. Ideally, the return time should be null. But for typical value of the frequency of the forth and back movement of 5 kHz, the displacement of a mechanical device at such velocities for the return direction is difficult to achieve.

Polygonal reflectors with a constant angular speed enable to overcome the problem of accelerating and decelerating a mass at high frequencies. Such deflecting devices present however two draw backs. The first one is that the impinging beam slides along the reflecting surface. Indeed, the axis of rotation can no longer be confounded with the reflecting surfaces at the point of impact of the beam. Therefore the emerging beam is no longer linearly deviated with time. The second one results from the passage from one reflecting surface to the other. At that instant the light-beam is scattered in two directions and represents lost energy.

It is a first object of the invention to provide a method of obtaining very high, practically constant, angular scanning speeds of a beam of coherent radiation.

It is second object of the invention to provide a method of scanning a light-beam with practically no loss of time and radiation energy for returning the beam to the starting position.

It is a further object of the invention to provide an apparatus for realizing the method.

Finally, it is an object of the invention to provide a deflecting device for repeatly deflecting the radiation beam on a same small area of a moving object.

In accordance with the present invention, the laser beam is made to follow a plurality of N optical pathes, the choice ot the pathes being dictated, according to a sequential law,by the direction of polarization of the radiation. Each optical path leads to a scanner which deflects the light with a certain periodicity, the phase shift between each scanners being an inverse ratio of the number of optical pathes.

The method of the invention for repeatly deflecting a beam of coherent radiation for obtaining a substantial saw-tooth motion of this beam comprises the steps of making a sequential polarization of the radiation so as to generate N successive output elementary beams of corresponding polarization. This sequential polarization occurs at a frequency equal to the frequency of the saw-tooth motion of the beam. A sequential deflexion of the output elementary beams is then done, each output elementary beam being successively deflected of a same given angular value according to a substantial sine law before the commutation of the deflexion to next output elementary beam. The output elementary beams are each deflected according to a same path-way.

In accordance with the invention, the pattern of the light-beam with respect to time therefore follows an approximate saw-tooth for which the return time is reduced pratically to zero.

The method of the invention and the device for carrying it out are particularly of interest to engrave intaglio printing forms or drums by using gating or pulse length modulation. Method and apparatus to engrave intaglio printing forms have been disclosed in US patent 4 131 782 in the name of the applicant. The method of the invention can also be used for dynamic equilibration of rotating devices.

The above and other objects, features and advantages of the present invention will become more readily apparent from the following description, reference being made to the accompanying drawings, among which =

Drawing 1 is the diagram of a saw-tooth function corresponding to the desired deflexion of an ideal scanner.

Drawing 2 is the approximation of the saw-tooth diagram which is achieved with the method in accordance with the invention.

Drawing 3 is a schematic view of the apparatus necessary for executing the method in accordance with the invention.

Drawing 4a and 4b are a device and corresponding graph illustrating the scanning method obtained by the use of an apparatus in accordance to drawing 3.

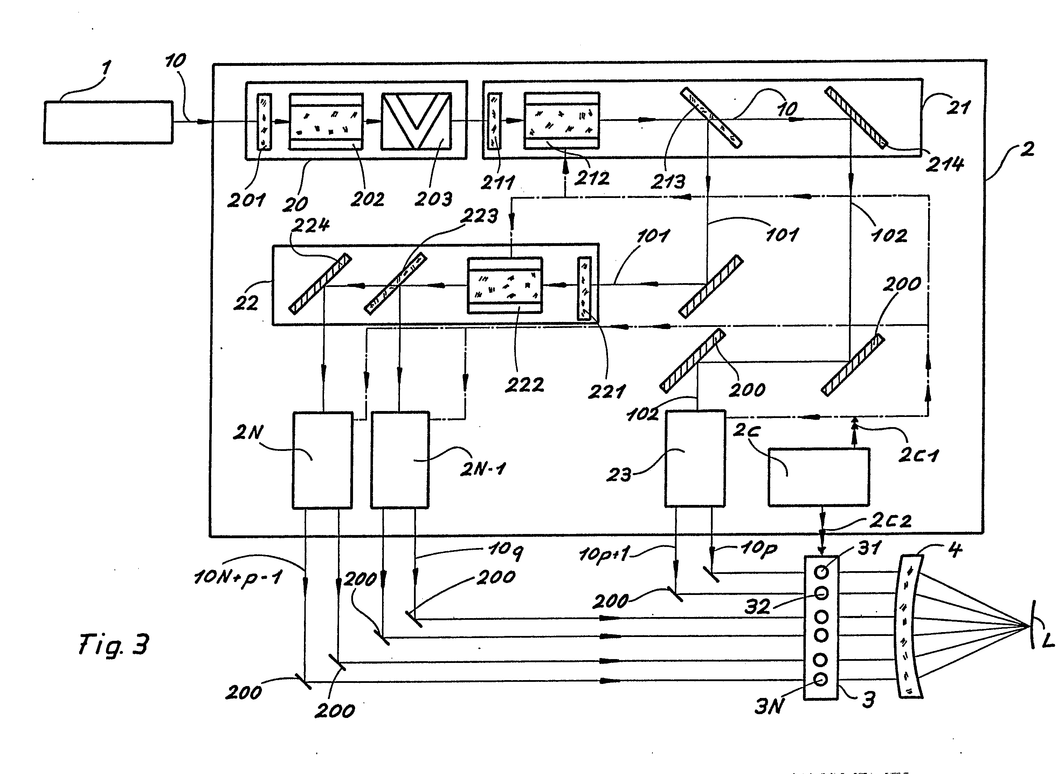

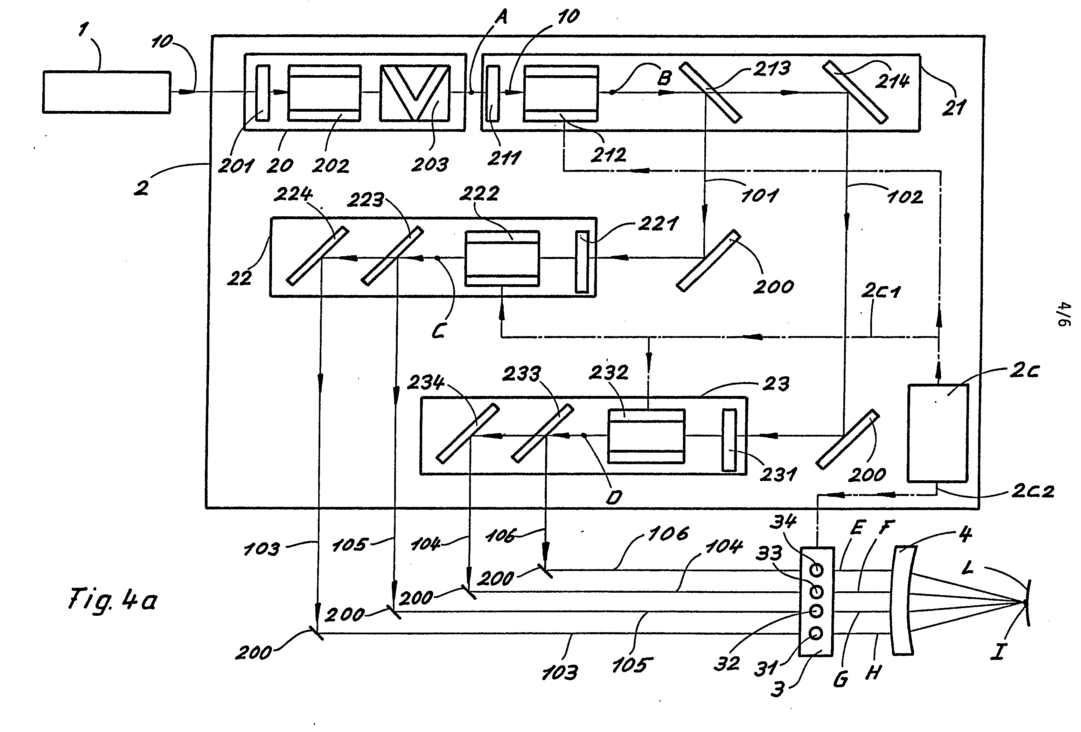

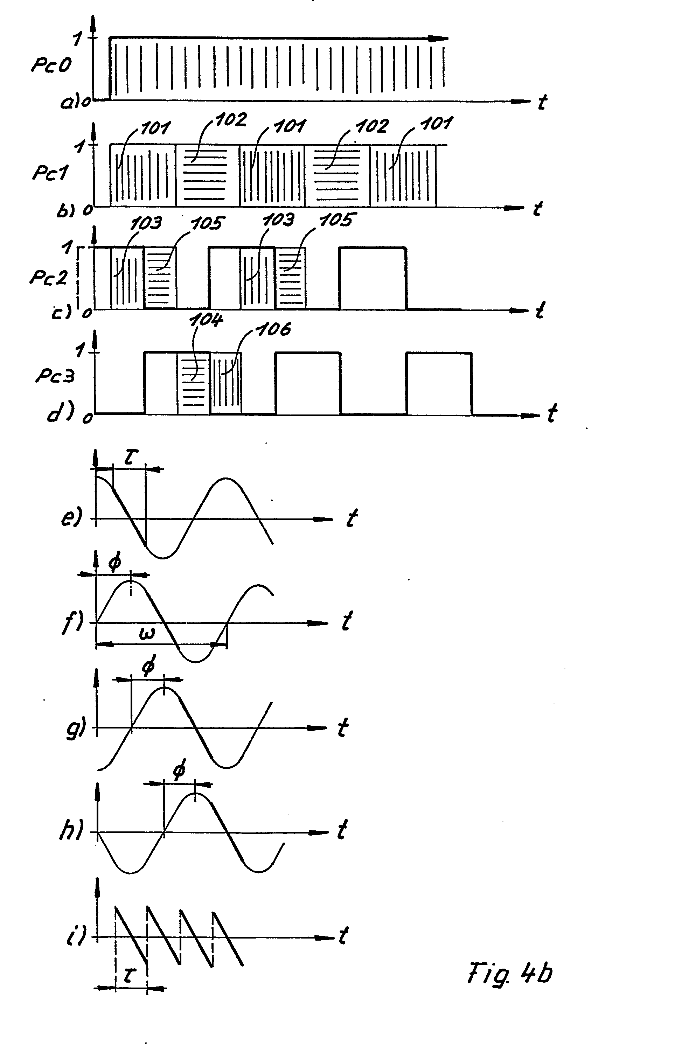

Drawing 4 c is an alternative embodiment of the apparatus shown figure 3.

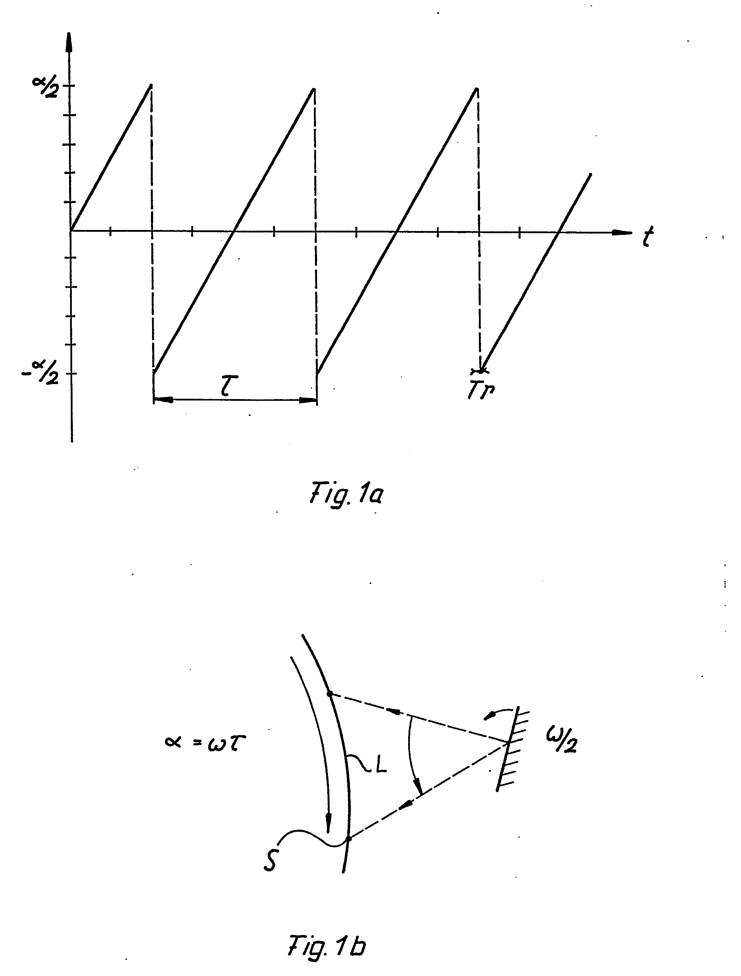

Drawing 1a illustrates the saw-tooth function an ideal scanner is expected to perform, the abscissa being the time scale and the ordinates the scanning amplitude in radians. The scanning frequency is $f = \frac{1}{\tau}$, $\tau$ being the period between two scannings. The return time $T_r$ is ideally null, in practice it should be as small as possible. Such scanner is used for example for deviating a laser beam so it made to follow a spot or small area on a moving object as shown figure 1b. This technique is used for instance for machining, engraving or drilling holes on moving objects in which a laser beam is used to engrave intaglio printing forms requiring the drilling of a large number of printing cells on a rotating cylinder.

The laser beam should precisely follow the spot or area S on the printing form until the cell has reached the desired size without blurring.

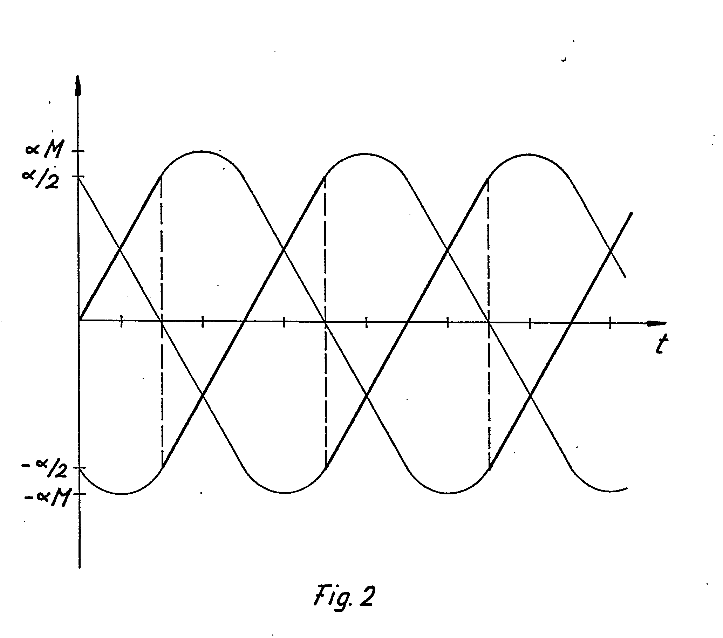

In accordance with the invention, the saw-tooth function of figure 1a is approximated by the function of figure 2. The beam of coherent radiation is made to undergo a sequential polarization so as to generate N successive output elementary beams of corresponding polarization. As a matter of fact the beam of coherent radiation is chopped into output elementary beams of corresponding polarization constituting the resulting beam. The sequential polarization occurs at a frequency equal to the frequency of the saw-tooth motion of the beam. Each of the output elementary beams are the successively deflected of a same given angular value $\alpha$ according to a substantial sine law before the commutation of the deflexion to the next output elementary beam. Each output elementary beam is deflected according to a same path-way L as shown Figure 1b.

According to Figure 2, the value of the angle of deflexion $\alpha$ of the output elementary beams is substantially equal to $\alpha = 2 k \alpha_M$ where $\alpha_M$ is the amplitude of the deflexion sine law, and k a constant coefficient comprised between 0 and 1, $0 \leq k \leq 1$. The coefficient k is substantially equal to $\frac{\omega\tau}{\pi}$ in which $\omega$ is the angular speed of the rotating body or pulsation of the sine law deflexion for each output elementary beam and $\tau$ the duration of scanning along the common path-way for each output elementary beam. The deflexion of each output elementary beams is phase-shifted from one to the next of an amount of $\phi = \frac{2\omega\tau}{kN}$ and the frequency F of the substantially saw-tooth motion of the beam appears then to be equal to $F = \frac{\omega}{k\pi}$ . According to the method of the invention, choosing a phase-shift value $\phi$ between the deflexion of the output elementary beams substantially equal to the angle of deflexion $\alpha$ of each output elementary beam $\alpha = \omega\tau = \phi$ will be of interest. In such a case the constant coefficient k equals $\frac{2}{N}$ where N is the number of output elementary beams. The substantial saw-tooth motion frequency of the beam is then directly related to such number by the relation $F = \frac{N\omega}{2\pi} = \frac{kN}{2\tau}$ . Increasing the number N of output elementary beams improves the linearity of the deflexion with regard to time, however with some loss of amplitude for each scanner since less than a complete half cycle of the sine law is used for each scanner. Linearity can be increased by extending the system to a great number N of output elementary beams since each scanner can be used in its maximum velocity range i.e. close to the zero-crossing. As a matter of fact, the method of the invention has been shown in Figure 2 for a number N of output elementary beams equal to N = 3. Any different number will not depart from the scope of our invention.

According to Figure 3 the apparatus for deflecting a light-beam of coherent radiation 10 generated by a laser generator 1 comprises a device 2 for separating the light beam 10 into at least N distinct optical pathes of corresponding polarization. In Figure 3 the optical pathes are labelled 10p, 10p + 1 to 10 N + p - 1 and are repre-

- 6 -

sented by the sequential laser beam path. At least, N successive elementary beam are thus generated according to a given sequential law.

A device 3 allows then to produce a successive sequential deflexion of a number N of output elementary beams. Each of the output elementary beams are successively deflected of a same angular value according to a substantial sine law before the commutation of the deflexion to the next output elementary beam. In figure 3 output elementary beams 10p to 10N + p - 1 are directed towards device 3 by means of fixed mirrors 200. An optical device 4 such as a converging lens allows thus the deflected output elementary  beams to be focused along a common path-way L. A substantial saw-tooth motion of the light-beam is thus generated onto common path-way L.

As shown in details Figure 3, the device 2 for separating the light-beam into at least N distinct optical pathes comprises in succession an ON - OFF switching unit 20 allowing the transmission or the deviation of the light beam 10. After transmission through ON - OFF switching unit 20 the laser beam 10 enters a first separating unit 21 disposed on the optical path of said light-beam 10.The first separating unit 21 may substantially consist in succession of a $\frac{\lambda}{4}$ circular polarizer strip 211 followed by a unit 212 for the polarization of the ON-OFF switched light-beam along two perpendicular directions according to a given time sequence. A first polarizer beam splitter 213 reflects light of beam 10 when polarized in the corresponding parallel first direction and let it through when polarized at second perpendicular direction and reverse.The first polarizer beam splitter 213 and a following mirror 214 allow thus successive elementary beams 101, 102 to be generated by change of the optical path of laser beam 10. A plurality of further separating units substantially identical with first separating unit and labelled 22, 23 ... to 2N are each arranged for receiving at least one of the successive elementary beam such as 101, 102 generated by one of the first or further separating unit in order to generate an even number of $N = 2^R$ of successive output elementary beams according to a time sequence related to the saw-tooth motion. A control unit 2c allows the generation of the time sequence of the successive output elementary beams according to the saw-tooth motion. The control unit 2c is connected with a control input of each polarization unit 212, 222, ... 2N2, such as 212 in first separating unit, for the polarization of the ON - OFF switched light-beam or elementary beam along two perpendicular directions. Control unit 2c allows thus the polarization switching between first and second perpendicular direction according to a chosen sequential time law. In figure 3 connexions between control unit 2c and separating unit 21, 22 ... 2N are represented in 2c 1 with dotted lines in order to overcome confusion of light-beam 10 or elementary beam 101, 102 with connexions. A number of arrows on dotted lines corresponds to a same number of independant control ways for each separating unit.

As a particular embodiment of the invention, the unit for the polarization of the ON - OFF switched light-beam 10 or elementary beam 101, 102 consists of a $\lambda/4$ circular polarizer strip 212, 221 ... followed by a Pockell-cell 212, 222 for each separating unit. The Pockell-cell allows the polarization of the light-beam 10, or 101,

102, along two distinct perpendicular directions related to a sequential control voltage. The sequential control voltages for controlling the Pockell-cells, 212, 222, ... are generated by control unit 2c and applied to the Pockell-cells by connexions 2c1 represented in dotted lines. The emerging beam from the Pockell-cell is linearly polarized along one direction or another (which is incidentally at right angles) depending on the sign of the electric voltage applied through each independant control way. The first polarizer beam splitters such as 223, 213,... consists each of an array of parallel metallic conductors (amplitude grating) or non metallic (phase grating) supported on a suitable substrate. The direction of reflexion of each array is perpendicular. Such kind of polarizer are commercialised for example by Cambridge Physical Sciences, Cambridge, England or by II - VI Inc. Glenshaw, Pennsylvania, USA. The first polarizer beam splitter therefore reflects the light-beam 10 into a first branch of the optical path forming elementary beams such as 101, or lets it through into a second branch such as 101 where it may meet first an optional corrective lens and the reflecting mirrors 200 to get then an even number $N = 2^R$ of output elementary beams 10p to 10 N + p - 1. As shown in Fig. 3, the output elementary beams 10p to 10 N + p - 1 are led through reflecting mirrors to a deflecting device 3 for producing a successive sequential deflexion of each output elementary beam according to a sine law. Deflecting device 3 is provided with N scanners labelled 31 to 3N each scanner receiving one output elementary beam for deflexion. Each output elementary beam 10p to 10 N + p - 1 is successively deflected of a same given angular value substantially equal to $\alpha = 2 k \alpha_M$ where $\alpha_M$ is the amplitude of the deflexion sine law and k a constant coefficient comprised between 0 and 1. Each scanner 31 to 3N may consist of a vibrating mirror or rotating mirrors. Vibrating mirrors or rotating mirrors are driven by classical motors which are not shown on Figure 3 since these are well known from one skilled in the art.

Scanners 31 to 3N are controlled by control unit 2c through N independant control channels $2c_2$. Control untit 2c allows the deflexion of each output elementary beams to be phase-shifted from one to the next of an amount $\phi = \frac{2\omega\tau}{kN}$ in which $k = \frac{\omega\tau}{\pi}$ . Control unit 2c allows thus for the light-beam a saw-tooth motion frequency $F = \frac{\omega}{k\pi}$ to be selected and generated.

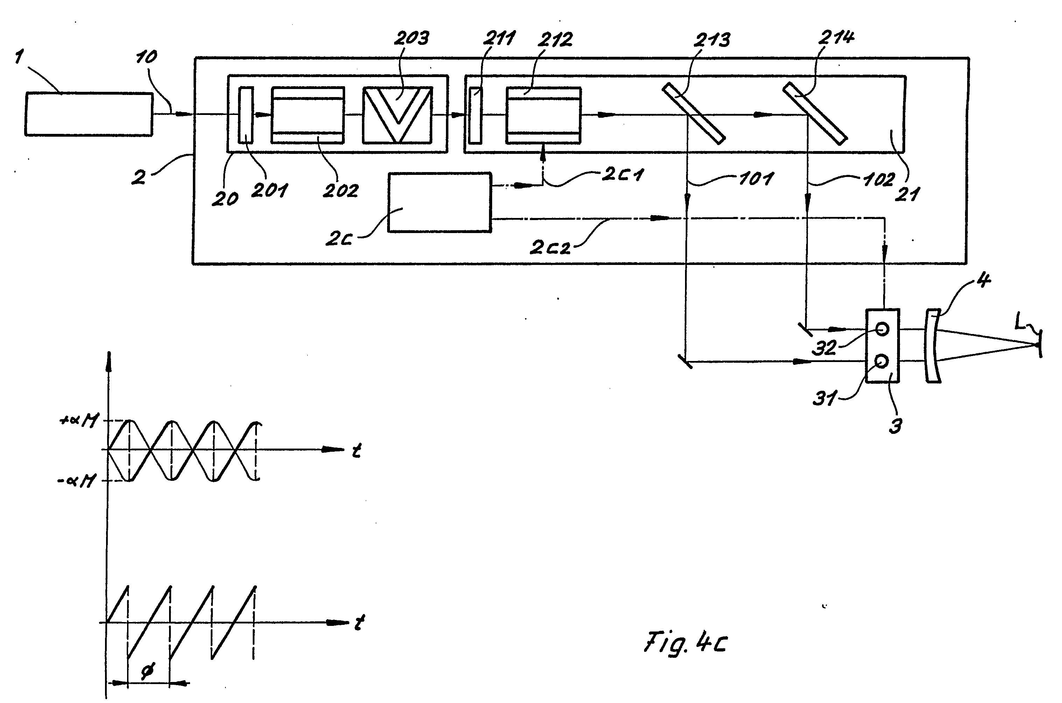

Selecting by means of control unit 2c the phase-shift value $\phi$ substantially equal to the angle of deflexion $\alpha$ of each output elementary beam $\alpha = \omega\tau = \phi$ allows thus for the resulting beam a saw-tooth motion of frequency $F = \frac{N\omega}{2\pi} = \frac{Nk}{2\tau}$ in which $\tau$ is the duration of scanning along the common path-way for each output elementary beam to be generated. As a consequence, each elementary beam is deflected of an angle $\alpha = \frac{4\alpha_M}{N}$ . Control unit 2c allows thus for a particular application of the method and apparatus of the invention linearity and frequency of saw-tooth motion to be optimized. As a matter of fact, the number of scanners driven by control unit 2c may be chosen inferior to the actual number of output elementary beams so as to get an odd number of output elementary beams after deflexion. In such a case, sequential control of both separating units and scanners is to be adapted in relation with the selected number of scanners. For such a purpose, control unit 2c may consist of a micro-computer adapted for process-control. Deflected output elementary beams are directed towards a focussing device 4. Focusing device 4 allows them to be focused according to a common path-way L and may consist of a focusing lens. Properly adjusted and controlled, scanners can direct the light to the desired spot on the moving object. Focusing lens 4 directs both beams after deflexion to the same spot on the object. This procedure is easily realised since both beams have parallel directions; the lens is then placed at a focal distance from the object to be treated. The mode of operation of apparatus shown Figure 3 will be then explained in a particular case in which the number N of output elementary beams and controlled scanners is same, N being an even number N = 4 for clarity. In a such particular case Figure 3 can be reduced to Figure 4a. Figure 4b shows a diagram from a) to i) in which different forms of signals or light polarization states are given with respect to time $t$ at corresponding points A, B, C, D, E, F, G, H, I, of figure 4a.

According to Figure 4b a), at point A of Figure 4a, the light-beam transmitted by ON - OFF switching circuit 20 has a given polarization direction represented by vertical lines when light is transmitted. In first separating unit 21 after transmission through Pockell-cell 212 the polarization direction of beam 10 at point B is changed into a perpendicular polarization direction represented by horizontal lines according to a sequential law given by a first control signal generated by control unit 2c. This signal is represented in Figure 4b, b) by a rectangular wave form of frequency $f = \frac{F}{2} = \frac{1}{2\tau}, \frac{1}{\tau}$ being the saw-tooth frequency. In Figure 4b, a), b), c), d) digital levels 0 and 1 correspond to opposite electrical voltages applied by means of control unit 2c on control input of Pockell-cells 202, 212, 222, 232 respectively for switching the polarization direction of corresponding beam. Each striped zone with parallel vertical or horizontal lines, respectively labelled 101 and 102 Figure 4b b), represents then the sequential law of transmission of elementary beams such as 101 and 102 with their given first and second polarization direction towards second and third separating unit 22 and 23 after reflexion on first and second polarizer unit 213 and 223 respectively and ancillary reflexion on fixed mirrors 200. Figure 4b c) and d) represent the digital treatment of elementary beams 101 and 102 respectively through second and third separating units 22 and 23 substantially at points C and D after transmission by Pockell-cells 222 and 232. Pockell-cells 222 and 232 of second and third separating units 22 and 23 are fed by control unit 2c with second and third control signal respectively represented by a rectangular wave form of same frequency $\frac{1}{2\tau}$ that the one of first control signal. Therefore second and third control signal are phase-shifted of $\phi = \alpha$ and $\phi = \alpha + \pi$ with respect to first control signal. Second and third control signal allow, when changing their digital level 0 or 1, the corresponding change of polarization direction of light-beam transmitted by Pockell-cell 222 and 232 and the sequential separation of elementary beams 101 and 102 according to two further optical pathes 103, 105 and 104, 106 through polarizers 223 and 233. In figures 4 b) c) and d) each striped zone with parallel vertical or horizontal lines respectively labelled 103, 105 and 104, 106 represents then the sequential law of transmission of output elementary beams such as 103, 105 and 104, 106. Figures 4b e, f, g, h represent the sine law deflexion for each scanner 31, 32, 33, 34 respectively. Each scanner allows the corresponding output elementary beam 103, 105, 104, 106 to be successively deflected of a same angular value $\alpha = \alpha_M$ . The deflexion of the output elementary beams is phase-shifted from one to the next of an amount of $\phi = \frac{\pi}{2}$ . The focusing device 4 allows a substantial saw-tooth motion of the light-beam at a frequency $F = \frac{1}{\tau} = \frac{kN}{2\tau}$ with $k = \frac{1}{2}$ and N = 4 to be generated onto the common path-way L.

Another particular embodiment of interest will be disclosed for N = 2 according to Figure 4 c. The same references represent the same éléments that were shown in Figure 4a. With respect to Figure 4c second and third separating unit 22 and 23 have been removed so that elementary beams 101 and 102 are directly used as output elementary beams and both directed towards scanners 31 and 32. In a such particular case both output elementary beams are deflected of an angular value $\alpha = 2\alpha_M$ . The deflexion of both output elementary beams is phase-shifted of an amount of $\phi = \pi$ from one to the next. The focusing device 4 allows a substantial saw-tooth motion of light-beam at a frequency $F = \frac{1}{\tau} = \frac{kN}{2\tau}$ with K = 1 and N = 2 to be generated onto the common path-way L.

Both particular embodiments for N = 4 and N = 2 appear of interest since with respect to simplicity of control signals necessary for the control of first, second, third separating unit and of single separating unit respectively the control unit can be changed into a square wave generating device.

Claims

1. A method of deflecting a beam of coherent radiation for obtaining a substantial saw-tooth motion of said beam comprising the steps of making:

- a sequential polarization of said radiation so as to generate N successive output elementary beams of corresponding polarization constituting said beam, said sequential polarization occuring at a frequency equal to the frequency of the saw-tooth motion of said beam,

- a sequential deflexion of said output elementary beams, each of them being successively deflected of a same given angular value according to a substantial sine law before the commutation of the deflexion to the next output elementary beam, said output elementary beams being deflected according to a same path-way.

2. A method according to claim 1 in which said value of deflexion of said output elementary beams is substantially equal to $\alpha = 2 k \alpha_M$ where $\alpha_M$ is the amplitude of the deflexion sine law, k a constant coefficient comprised between 0 and 1, $0 < k \leq 1$, said coefficient k being substantially equal to $k = \frac{\omega \tau}{\pi}$ in which $\omega$ is the angular speed or pulsation of the sine law deflection for each output beam, $\tau$ the duration of scanning along the common path-way for each output elementary beam, the deflexion of said output elementary beams being phase-shifted from one to the next of an amount of

$\phi = \frac{2\omega\tau}{kN}$ and the frequency of the substantially saw-tooth motion of said beam being substantially equal to $F = \frac{\omega}{k\pi}$ .

3. A method according to claim 2, in which the angle of deflexion $\alpha$ of said output elementary beams is substantially equal to the phase-shift $\phi$ between the deflexion of said output elementary beams $\alpha = \omega\tau = \phi$ thereby allowing said constant coefficient k to be equal to $\frac{2}{N}$ , $k = \frac{2}{N}$ .

4. An apparatus for deflecting a light-beam of coherent radiation according to a substantial saw-tooth motion onto a common path-way which comprises:

- means for separating said light-beam into at least N distinct optical-pathes of corresponding polarization thereby generating N successive elementary beams according to a given sequential law,

- means for producing a successive sequential deflexion of a number N of output elementary beams, each of them being successively deflected of a same angular value according to a substantial sine law before the commutation of the deflexion to the next output elementary beam,

- means for focusing each deflected output elementary beam according to a common path-way thereby allowing a substantial saw-tooth motion of said light-beam to be generated onto said common path-way.

5. An apparatus according to claim 4 in which said means for separating said light-beam into at least N distinct optical pathes comprises:

- an ON - OFF switching unit allowing the transmission or the deviation of said light-beam,

- a first separating unit disposed on the optical path of said light-beam, said first separating unit substantially consisting in succession of a unit for the polarization of said ON - OFF switched light-beam along two perpendicular directions according to a given time sequence and a first and second polarizer unit reflecting light polarized in the corresponding parallel first direction and letting light through when polarized at second perpendicular direction and reverse, said first and second polarizer allowing thus successive elementary beams to be generated,

- a plurality of further separating units each arranged for receiving at least one of said successive elementary beam generated by one of said first or further separating unit thereby generating an even number $N = 2^R$ of successive output elementary beams according to a time sequence related to said sawtooth motion.

6. An apparatus according to claim 5, in which said unit for the polarization of said ON - OFF switched light beam consists of:

- a $\lambda/4$ circular polarizer strip,

- a Pockell cell allowing the polarization of the light-beam along two distinct perpendicular directions related to a sequential control voltage applied to said Pockell cell.

7. An apparatus according to claim 5 in which said first and second polarizer unit consists each of an array of parallel metallic conductors supported on a suitable substrate, the direction of reflexion of each array being perpendicular.

8. An apparatus according to claim 4, in which said means for producing a successive sequential deflexion according to a sine law of a number N of output elementary beams comprise N scanners, each scanner allowing said corresponding output elementary beam to be successively deflected of a same given angular value substantial-ly equal to $\alpha = 2 k \alpha_M$ where $\alpha_M$ is the amplitude of the deflexion sine law, k a constant coefficient comprised between 0 and 1, $0 < k \leq 1$, said coefficient k being substantially equal to $k = \frac{\omega \tau}{\pi}$ in which $\omega$ is the angular speed or pulsation of the sine law deflection for each output elementary beam, $\tau$ the duration of scanning along the common path-way for each output elementary beam, the deflexion of said output elementary beams being phase-shifted from one to the next of an amount of $\phi = \frac{2 \omega \tau}{kN}$ thereby allowing for the light beam a saw-tooth motion frequency substantially equal to $F = \frac{\omega}{k\pi}$ to be generated.

9. An apparatus according to claim 8, in which each of said scanners allows said corresponding output elementary beam to be de-flected of an angle $\alpha$ substantially equal to the phase-shift $\phi$ bet-ween the deflexion of said output elementary beams, $\alpha = \omega\tau = \phi$, said output elementary beams each being thus deflected of an angle $\alpha = \frac{4 \alpha_M}{N}$ the frequency of the saw-tooth motion for the beam being thus equal to $F = \frac{N\omega}{2\pi}$ .

10. An apparatus according to claim 8, in which said scanners consist each of vibrating mirrors.

11. An apparatus according to claim 8 in which said scanners consist each of rotating mirrors.

12. An apparatus according to claim 4, in which said means for focusing each deflected output elementary beam according to a common path-way consist of a focusing lens.

13. An apparatus for deflecting a light-beam of coherent radiation according to a substantial saw-tooth motion onto a path-way which comprises:

- means for separating said light-beam into two optical pathes, said means including an ON - OFF switching unit allowing the transmission or the deviation of said light-beam, said ON-OFF switching unit being coupled with a first separating unit which substantially consists in succession of a unit for the polarization of said ON - OFF switched light beam along two perpendicular directions according to a given time sequence and a first and second polarizer unit reflecting light polarized in the corresponding parallel first direction and letting light through when polarized at second perpendicular direction and reverse, said first and second polarizer allowing thus successive first and second output elementary beams to be generated,

- means for producing a successive sequential deflexion of said first and second output elementary beams according to a sine law, said means comprising two scanners, each scanner allowing said corresponding output elementary beam to be successively deflected of a same given angular value substantially equal to $\alpha = 2 \alpha_M$ where $\alpha_M$ is the amplitude of the deflexion sine law, the deflexion of said first and second output elementary beams being phase-shifted from first to second of an

- 18 -

amount of $\phi = \pi$,

- means for focusing each deflected output elementary beam according to a common path-way thereby allowing a substantial sawtooth motion of said light-beam to be generated at a frequency $F = \frac{\omega}{\pi}$ said onto common path-way in which $\omega$ is the angular speed or pulsation of the sine law deflexion for each elementary beam.

14. An apparatus for deflecting a light-beam of coherent radiation according to a substantial saw-tooth motion on to a common path-way which substantially comprises means for separating said light-beam into four optical pathes, said means including:

- an ON - OFF switching unit allowing the transmission or the deviation of said light-beam, said ON - OFF switching unit being coupled with a first separating unit which substantially consists in succession of a unit for the polarization of said ON - OFF switched light-beam along two perpendicular directions according to a given time sequence and a first and second polarizer unit reflecting light polarized in the corresponding parallel first direction and letting light through when polarized at second perpendicular direction and reverse, said first and second polarizer allowing thus successive elementary beams to be generated,

- a second and third separating unit each arranged for receiving at least one of said successive elementary beam generated by said first separating unit thereby generating an even number N = 4 of successive output elementary beams according to a time sequence related to the saw-tooth motion.

- means for producing a successive sequential deflexion of said output elementary beams according to a sine law, said means comprising four scanners, each scanner allowing said corresponding output elementary beam to be successively deflected of a same given angular value substantially equal to $\alpha = \alpha_M$ where $\alpha_M$ is the amplitude of the deflexion sine law, the deflexion of said output elementary beams being phase-shifted from one to the next of an amount of $\phi = \dfrac{\pi}{2}$ ,

- means for focusing each deflected output elementary beam according to a common path way thereby allowing a substantial saw-tooth motion of said light-beam at a frequency $F = \dfrac{2\omega}{\pi}$ to be generated onto said common path way in which $\omega$ is the angular speed or pulsation of the sine law deflexion for each output elementary beam.

Fig. 1a

$\alpha = \omega \tau$

Fig. 1b

*Fig. 2*

Fig. 3

Fig. 4a

4/6

0062006

5/6

0062006

Fig. 4b

Fig. 4c

0062006

9/9